# EUROPEAN PATENT SPECIFICATION

(11) **EP 2 797 467 B1**
(45) Date of publication and mention of the grant of the patent: **08.08.2018**
(21) Application number: 12790562.8
(22) Date of filing: 26.11.2012
(51) Int. Cl.: A47J 31/057

(54) **HOT BEVERAGE PREPARATION MACHINE**
MASCHINE ZUR ZUBEREITUNG HEISSER GETRÄNKE
MACHINE DE PRÉPARATION DE BOISSONS CHAUDES

(30) Priority: 26.12.2011 TR 201112954
(43) Date of publication of application: 05.11.2014
(73) Proprietor: Arçelik Anonim Sirketi, 34950 Istanbul (TR)
(72) Inventor: COBAN, Omer Burak, 34950 Instanbul (TR); DAVASLIGIL, Sena, 34950 Istanbul (TR); GERZELI, Ismail, 34950 Istanbul (TR); HASANREISOGLU, Ali Levent, 34950 Istanbul (TR); VATANSEVER, Celal, 34950 Istanbul (TR)
(86) International application number: PCT/EP2012/073549
(87) International publication number: WO 2013/098000

(56) References cited:
- WO-A1-2010/041003
- CN-U- 201 500 005
- DE-A1- 19 857 165
- GB-A- 221 264
- GB-A- 2 102 280

## Description

The present invention relates to a hot beverage preparation machine comprising a handle.

In hot beverage preparation machines, the water filled into the water reservoir is heated by a water heater and is transferred to the brewing chamber containing raw material of the beverage to be prepared. The brewing process is performed in the brewing chamber as the result of the interaction of the beverage raw material and water. The brewed beverage is transferred into a pot afterwards and served.

In the state of the art embodiment, International Patent Application No. WO 2010041003, an electric infusion beverage maker comprising a liquid heating chamber having electric heating means associated therewith for heating liquid in the chamber, an infusion chamber receives in use a beverage to be infused, a pump transfers heated liquid from the liquid heating chamber to the infusion chamber at a transfer rate is disclosed.

In the state of the art embodiments, Great Britain Patent Applications No. GB 221264 and GB2102280, water heated in the water container is transferred to the brewing chamber by being conveyed upwards through a pipe passing inside the handle. Document DE-A1-198 57 165 discloses the preamble of claim 1. The aim of the present invention is the realization of a hot beverage preparation machine that occupies less space.

In the hot beverage preparation machine realized in order to attain the aim of the present invention and explicated in the claims, the pipe providing the water heated in the water container to be transferred into the brewing chamber and the pump providing the water to rise inside the said pipe are embedded into the handle and the said machine further comprises a pot disposed under the brewing chamber wherein the beverage is transferred after the brewing process is completed in the brewing chamber. Thus, the pump and the pipe providing the transfer and the propulsion of the water are prevented from occupying much space in the hot beverage preparation machine and the realization of a hot beverage preparation machine occupying less space on the counter is provided.

In an embodiment of the present invention, the handle is composed of two pieces. In this embodiment, the pipe and the pump are disposed into a half of the handle so as to be at least partially therein. Afterwards, the other half of the handle is placed over the pipe and the pump so as to surround the uncovered portions of the pipe and the pump and thus the two halves of the handle are fastened to each other. Thus, the pipe and the pump are provided to be easily mounted so as to be inside the handle.

In another embodiment of the present invention, during the production process, the pipe and the pump are embedded into the handle. In order to achieve this, during the production of the handle being produced preferably from plastic, the pipe and the pump are placed into the mould and afterwards the handle is produced in this mould. Thus, the handle is produced so that the pipe and the pump are embedded therein.

In an embodiment of the present invention, the handle comprises a vertical gripping portion enabling the water container to be carried by being gripped and two horizontal connecting portions that connect the gripping portion to the water container from its lower and upper ends. In this embodiment, the pump is placed into the connecting portion at the lower end of the gripping portion.

In an embodiment of the present invention, a pump of diaphragm type is used, thus the water is provided to be controllably taken into the pump.

In another embodiment of the present invention, a pump of centrifuge type is used, thus the energy consumption of the hot beverage preparation machine is minimized.

In the hot beverage preparation machine of the present invention, by placing the pump into an idle volume, a compact placement is obtained.

The hot beverage preparation machine realized in order to attain the aim of the present invention is illustrated in the attached figures, where:

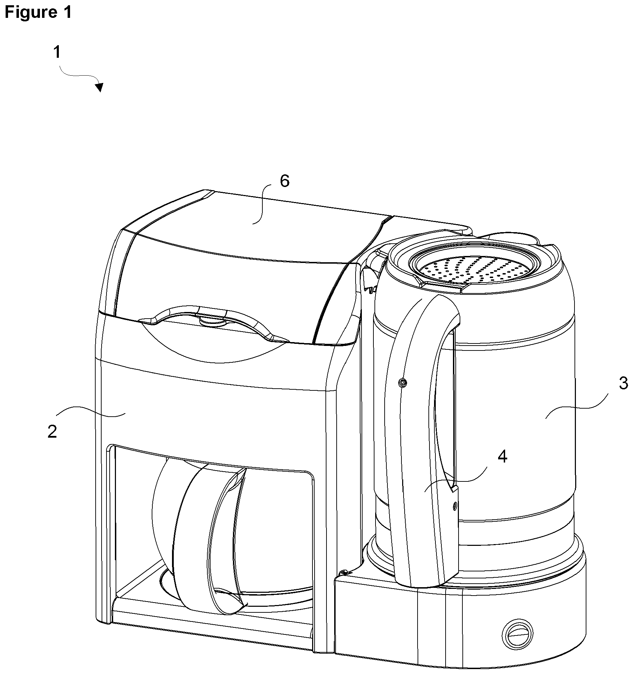

Figure 1 - is the perspective view of a hot beverage preparation machine .

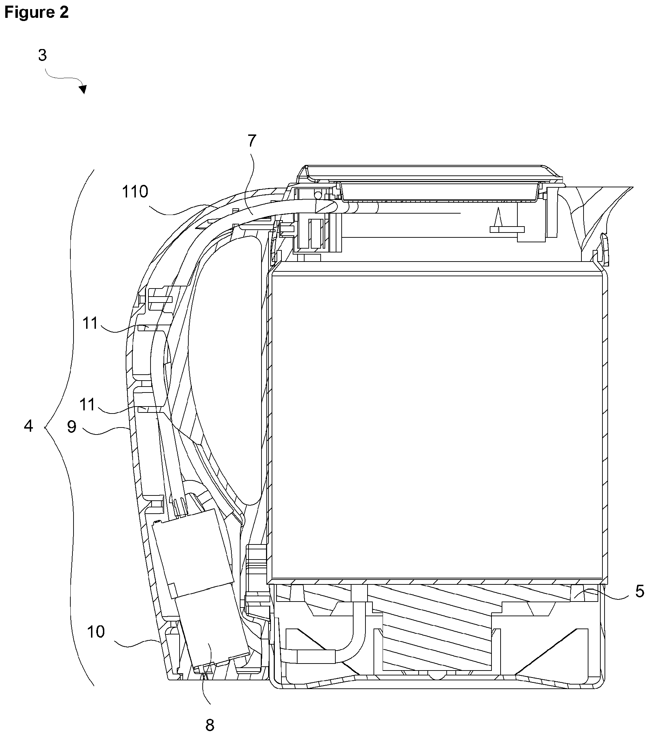

Figure 2 - is the sideways cross-sectional view of a water container.

The elements illustrated in the figures are numbered as follows:
1. Hot beverage preparation machine
2. Body
3. Water container
4. Handle
5. Water heater
6. Brewing chamber
7. Pipe
8. Pump
9. Gripping portion
10. 110. Connecting portion
11. Rib

The hot beverage preparation machine (1) comprises:
- a body (2),
- a water container (3) placed on the body (2), suitable for filling water therein,
- a handle (4) that extends in the vertical direction almost along the water container (3), enabling the water container (3) to be taken off the body (2) and carried by the user by being gripped,
- a water heater (5) that provides the water in the water container (3) to be heated,
- a brewing chamber (6) wherein the raw material of the beverage to be prepared is put and whereto the water heated in the water container (3) is transferred, wherein the brewing process is performed as the result of the interaction of the beverage raw material and water and
   - a pipe (7) that extends from bottom upwards in the handle from end to end, providing the water heated in the water container (3) to be transferred to the brewing chamber (6), with its upper end opening to the brewing chamber (6).

The hot beverage preparation machine (1) of the present invention furthermore comprises a pump (8) that is disposed inside the handle (4), whereto the lower end of the pipe (7) is connected, providing the water to be raised along the pipe (7) to be conveyed into the brewing chamber (6) and a pot disposed under the brewing chamber (6) wherein the beverage is transferred after the brewing process is complete in the brewing chamber (6). Thus, the pump (8) is prevented from occupying much more space in the hot beverage preparation machine (1).

In the hot beverage preparation machine (1) of the present invention, when hot beverage is desired to be prepared, water is filled into the water container (3) and placed on the body (2). The water in the water container (3) is provided to be heated by operating the water heater (5). The heated-water is pumped into the pipe (7) by means of the pump (8) inside the handle (4) and transferred into the brewing chamber (6) from the pipe (7). After the brewing process is completed in the brewing chamber (6), the beverage is ready to serve by being transferred into the pot disposed under the brewing chamber (6).

In an embodiment of the present invention, the handle (4) is composed of two pieces and is formed by joining the pieces so that the pipe (7) and the pump (8) remain therebetween. Thus, the pipe (7) and the pump (8) are provided to be easily placed into the handle (4).

In another embodiment of the present invention, the pipe (7) and the pump (8) are placed into the mould during the production of the handle (4) and thus the pipe (7) and the pump (8) are provided to be produced as integrated with the handle (4).

In an embodiment of the present invention, the handle (4) comprises
- a gripping portion (9) extending in the vertical direction, enabling the handle (4) to be carried by being gripped and
- two connecting portions (10, 110) extending almost perpendicularly to the gripping portion (9), from the gripping portion (9) towards the water container (3), providing the gripping portion (9) to be connected to the water container (3), one being above and the other below.

In this embodiment, the pump (8) is disposed in the connecting portion (10) located below. Thus the realization of a hot beverage preparation machine (1) that occupies less space is provided.

In an embodiment of the present invention, the handle (4) comprises at least one rib (11) that supports the pipe (7) by surrounding it from the sides. Thus, the pipe (7) is provided to be kept at the desired position, enabling regular water flow.

In an embodiment of the present invention, the pump (8) is of the diaphragm type. Thus, the water heated in the water container (3) is prevented from directly filling into the pump (8) and is provided to be controllably taken into the pump (8).

In another embodiment of the present invention, the pump (8) is of the centrifugal type. Thus, energy consumed during the transfer of the water is decreased.

By means of the present invention, a multi-functional hot beverage preparation machine (1) is realized that occupies less space and wherein the water container (3) can also be used for serving.

It is to be understood that the present invention is not limited to the embodiments disclosed above and a person skilled in the art can easily introduce different embodiments. These should be considered within the scope of the protection postulated by the claims of the present invention.

## Claims

1. A hot beverage preparation machine (1) comprising
- a body (2),
- a water container (3) placed on the body (2), suitable for filling water therein,
- a handle (4) that extends in the vertical direction almost along the water container (3), enabling the water container (3) to be taken off the body (2) and carried by the user by being gripped,
- a water heater (5) that provides the water in the water container (3) to be heated,
- a brewing chamber (6) wherein the raw material of the beverage to be prepared is put and whereto the water heated in the water container (3) is transferred, wherein the brewing process is performed as the result of the interaction of the beverage raw material and water and
- a pot disposed under the brewing chamber (6) wherein the beverage is transferred after the brewing process is complete in the brewing chamber (6), the hot beverage preparation machine (1) being **characterized in that**
- a pipe (7) extends from bottom upwards in the handle (4) from end to end, providing the water heated in the water container (3) to be transferred to the brewing chamber (6), with its upper end opening to the brewing chamber (6), and
- a pump (8) is disposed inside the handle (4), whereto the lower end of the pipe (7) is connected, providing the water to be raised along the pipe (7) to be conveyed into the brewing chamber (6).

2. A hot beverage preparation machine (1) as in Claim 1, **characterized by** the handle (4) composed of two pieces and formed by joining the pieces so that the pipe (7) and the pump (8) remain therebetween.

3. A hot beverage preparation machine (1) as in Claim 1, **characterized by** the handle (4), that is produced as integrated with the pipe (7) and the pump (8) by placing the pipe (7) and the pump (8) into the mould during its production.

4. A hot beverage preparation machine (1) as in any one of the above claims, **characterized by** the handle (4) having a gripping portion (9) extending in the vertical direction, enabling the handle (4) to be carried by being gripped and two connecting portions (10, 110) extending almost perpendicularly to the gripping portion (9), from the gripping portion (9) towards the water container (3), providing the gripping portion (9) to be connected to the water container (3), one being above and the other below, and **by** the pump (8) that is placed into the connecting portion (10).

5. A hot beverage preparation machine (1) as in any one of the above Claims, **characterized by** the handle (4) comprising at least one rib (11) that supports the pipe (7) by gripping from the sides.

6. A hot beverage preparation machine (1) as in any one of the above Claims, **characterized by** the diaphragm-type pump (8).

7. A hot beverage preparation machine (1) as in any one of the Claims 1 to 5, **characterized by** the centrifugal-type pump (8).

## Patentansprüche

1. Heißgetränkezubereitungsvorrichtung (1) umfassend
- einen Körper (2),
- einen Wasserbehälter (3), der auf dem Körper (2) platziert ist und zum Einfüllen von Wasser geeignet ist,
- einen Griff (4), der sich in der vertikalen Richtung nahezu entlang des Wasserbehälters (3) erstreckt und es ermöglicht, dass der Wasserbehälter (3) aus dem Körper (2) abgenommen und vom Benutzer durch Ergreifen getragen wird,
- einen Warmwasserbereiter (5), der das Wasser in dem zu erwärmenden Wasserbehälter (3) bereitstellt,
- eine Brühkammer (6), wobei das Rohmaterial des zu vorbereitende Heißgetränks eingebracht wird und das im Wasserbehälter (3) erhitzte Wasser übertragen wird, wobei das Brauprozess als Ergebnis des Interaktions des Getränkrohmaterials und des Wassers durchgeführt wird,
- ein Topf, der unter der Brühkammer (6) angeordnet ist, wobei das Getränk nach dem Brauprozess beendet ist, in die Brühkammer (6) geliefert wird, die Heißgetränkezubereitungsvorrichtung (1) **dadurch gekennzeichnet, dass**
- ein Rohr (7) sich von unten nach oben im Griff (4) von Ende zu Ende erstreckt, wobei das in dem Wasserbehälter (3) erwärmte Wasser mit seiner oberen Endöffnung in die Brühkammer (6) zur Brühkammer (6) überführt wird, und
- eine Pumpe (8) innerhalb des Griffs (4) angeordnet ist, an dem das untere Ende des Rohrs (7) verbunden ist, wobei die Beförderung das aufzubringende Wasser entlang des Rohres (7) in die Brühkammer (6) vorgesehen ist.

2. Heißgetränkezubereitungsvorrichtung (1) nach Anspruch 1 **gekennzeichnet durch** den Griff (4), der aus zwei Teilen besteht und durch Verbinden der Teile gebildet, sodass das Rohr (7) und die Pumpe (8) dazwischen verbleiben.

3. Heißgetränkezubereitungsvorrichtung (1) nach Anspruch 1, **gekennzeichnet durch** den Griff (4), der integral mit dem Rohr (7) und der Pumpe (8) dadurch hergestellt ist, dass das Rohr (7) und die Pumpe (8) während dessen Herstellung in die Form eingebracht werden.

4. Heißgetränkezubereitungsvorrichtung (1) nach einem der vorangehenden Ansprüche **gekennzeichnet durch** den Griff (4) mit einem Griffabschnitt (9), der sich in der vertikalen Richtung erstreckt und es ermöglicht, dass der Griff (4) durch Ergreifen getragen wird und mit zwei Verbindungsabschnitte (10, 110), die sich nahezu senkrecht zum Griffabschnitt (9) von dem Griffabschnitt (9) zum Wasserbehälter (3) erstrecken und es ermöglichen, dass der Griffabschnitt (9) mit dem Wasserbehälter (3) verbunden wird, indem einer oben und der andere unten ist, und **durch** die Pumpe (8), die im Verbindungsabschnitt (10) angeordnet ist.

5. Heißgetränkezubereitungsvorrichtung (1) nach einem der vorangehenden Ansprüche **gekennzeichnet durch** den Griff (4), der mindestens eine Rippe (11), die das Rohr (7) durch Eingreifen von Seiten stützt.

6. Heißgetränkezubereitungsvorrichtung (1) nach einem der vorangehenden Ansprüche, **gekennzeichnet durch** die membranartige Pumpe (8).

7. Heißgetränkezubereitungsvorrichtung (1) nach einem der Ansprüche 1 bis 5, **gekennzeichnet durch** die zentrifugenartige Pumpe (8).

## Revendications

1. Machine de préparation de boisson chaude (1) comprenant
- un corps (2),
- un réservoir d'eau (3) placé sur le corps (2), adapté pour remplir l'eau à l'intérieur,
- une poignée (4) qui s'étend dans la direction verticale presque le long du réservoir d'eau (3), permettant au réservoir d'eau (3) d'être retiré du corps (2) et porté par l'utilisateur en étant saisi,
- un chauffe-eau (5) qui fournit l'eau dans le réservoir d'eau (3) à chauffer,
- une chambre d'infusion (6) dans laquelle la matière première de la boisson à préparer est mise en place et où l'eau chauffée dans le réservoir d'eau (3) est transférée, dans lequel le processus de brassage est réalisé à la suite de l'interaction de la matière première de boisson et de l'eau et
- un pot disposé sous la chambre d'infusion (6) dans lequel la boisson est transférée après que le processus d'infusion est terminé dans la chambre d'infusion (6), la machine de préparation de boisson chaude (1) étant **caractérisée en ce que**
- un tuyau (7) s'étend de bas en haut dans la poignée (4) d'un bout à l'autre, fournissant l'eau chauffée dans le réservoir d'eau (3) à transférer dans la chambre d'infusion (6), son extrémité supérieure débouchant sur l'infusion chambre (6), et
- une pompe (8) est disposée à l'intérieur de la poignée (4), à laquelle est raccordée l'extrémité inférieure du tuyau (7), pour amener l'eau à remonter le tuyau (7) dans la chambre d'infusion (6).

2. Machine de préparation de boisson chaude (1) selon la revendication 1, **caractérisée par** la poignée (4) est composée de deux pièces et est formée en joignant les pièces de sorte que le tuyau (7) et la pompe (8) restent entre elles.

3. Machine de préparation de boisson chaude (1) selon la revendication 1, **caractérisée par le fait que** la poignée (4) est intégrée au tuyau (7) et à la pompe (8) en plaçant le tuyau (7) et la pompe (8) dans le moule pendant sa production.

4. Machine de préparation de boisson chaude (1) selon l'une quelconque des revendications précédentes, **caractérisée en ce que** la poignée (4) comporte une partie de préhension (9) s'étendant dans la direction verticale, permettant le maintien de la poignée (4) par pincement et deux portions de liaison (10, 110) s'étendant presque perpendiculairement à la partie de préhension (9), de la partie de préhension (9) vers le réservoir d'eau (3), fournissant la partie de préhension (9) à raccorder au réservoir d'eau (3), l'une étant au-dessus et l'autre au-dessous, et **par** la pompe (8) qui est placée dans la partie de raccordement (10).

5. Machine de préparation de boisson chaude (1) selon l'une quelconque des revendications précédentes, **caractérisée par** la poignée (4) comprend au moins une nervure (11) qui supporte le tuyau (7) en le saisissant par les côtés.

6. Machine de préparation de boisson chaude (1) selon l'une quelconque des revendications précédentes, **caractérisée par** la pompe du type à diaphragme (8).

7. Machine de préparation de boisson chaude (1) selon l'une quelconque des revendications 1 à 5, **caractérisée par** la pompe de type centrifuge (8).
